# EUROPÄISCHE PATENTSCHRIFT

(11) **EP 4 007 671 B1**
(45) Veröffentlichungstag und Bekanntmachung des Hinweises auf die Patenterteilung: **05.11.2025**
(21) Anmeldenummer: 20747413.1
(22) Anmeldetag: 30.07.2020
(51) Int. Cl.: B23K 9/095, B23K 31/12, B23K 9/09

(54) **SCHWEISSSYSTEM UND SCHWEISSVERFAHREN**
WELDING SYSTEM AND WELDING PROCESS
APPAREIL DE SOUDAGE ET PROCEDE DE SOUDAGE

(30) Priorität: 01.08.2019 EP 19189617
(43) Veröffentlichungstag der Anmeldung: 08.06.2022
(73) Patentinhaber: FRONIUS INTERNATIONAL GmbH, 4643 Pettenbach (AT)
(72) Erfinder: ENNSBRUNNER, Helmut, 4643 Pettenbach (AT); REINTHALER, Günther, 4643 Pettenbach (AT)
(74) Vertreter: SONN Patentanwälte GmbH & Co KG
(86) Internationale Anmeldenummer: PCT/EP2020/071519
(87) Internationale Veröffentlichungsnummer: WO 2021/019019

(56) Entgegenhaltungen:
- WO-A2-2016/100950
- US-A1- 2004 034 608
- REISGEN UWE ET AL: "Online-Schmelzbaddiagnostik zum Überwachen der Qualität und Vermeiden von Fehlern beim Lichtbogenschweißen", THESE DE DOCTORAT PRESENTÉE AU DÉPARTEMENT DE CHIMIE DE L'UNIVERSITÉ DE LAUSANNE POUR L'OBTENTION DU GRADE DE DOCTEUR ÈS SCIENCES, DVS VERLAG, DUSSELDORF, DE, vol. 66, no. 5, 1 May 2014 (2014-05-01), pages 243 - 249, XP001589036, ISSN: 0036-7184
- MARION PURRIO: "Prozessanalyse und -überwachung beim Metall-Schutzgasschweißen durch optische In-situ-Sensorsysteme Process Analysis and Monitoring in Gas Metal Arc Welding by Optical In-Situ Sensor Systems", 1 January 2017 (2017-01-01), 52018 Aachen, pages 1 - 128, XP055667218, Retrieved from the Internet <URL:http://publications.rwth-aachen.de/record/699426/files/699426.PDF> [retrieved on 20200211]

## Beschreibung

Die Erfindung betrifft ein Schweißsystem, mit einer Schweißstromquelle zur Bereitstellung zumindest eines sich mit einer Periode periodisch ändernden Prozessparameters, einem Prozessregler zur Festlegung der Periode des zumindest einen Prozessparameters, einem Leistungsteil, zumindest einem Sensor zur Erfassung von Prozessgrößen und bzw. oder zumindest einem Prozessaktor zur Beeinflussung von Prozessparametern und zumindest einem Anschluss zur Verbindung mit dem zumindest einen Sensor und bzw. oder dem zumindest einen Prozessaktor, wobei der zumindest eine Sensor und bzw. oder der zumindest eine Prozessaktor durch den sich periodisch ändernden Prozessparameter nach zumindest einer vorgegebenen Triggerbedingung triggerbar ist, wobei eine mit der Schweißstromquelle in Verbindung stehende Benutzerschnittstelle vorgesehen ist, über welche die zumindest eine Triggerbedingung für die Triggerung des zumindest einen Sensors und bzw. oder des zumindest einen Prozessaktors innerhalb der Periode zumindest eines Prozessparameters festlegbar ist, und bei Erfüllung der festgelegten Triggerbedingung zumindest ein definiertes Triggersignal bereitstellbar und über den zumindest einen Anschluss an den zumindest einen Sensor und bzw. oder den zumindest einen Prozessaktor übertragbar ist, und somit der zumindest eine Sensor und bzw. oder der zumindest eine Prozessaktor entsprechend der festgelegten Triggerbedingungen durch den zumindest einen sich periodisch ändernden Prozessparameter triggerbar ist.

Weiters betrifft die Erfindung ein Schweißverfahren, bei dem in einer Schweißstromquelle zumindest ein Prozessparameter mit einer Periode periodisch geändert wird, wobei mit einem Prozessregler die Periode des zumindest einen Prozessparameters festgelegt wird, und von einem Leistungsteil der zumindest eine Prozessparameter erzeugt wird, und über zumindest einen Anschluss zumindest ein Sensor zur Erfassung von Prozessgrößen und bzw. oder zumindest ein Prozessaktor zum Beeinflussen von Prozessparametern verbunden wird, wobei der zumindest eine Sensor und bzw. oder der zumindest eine Prozessaktor durch den zumindest einen sich periodisch ändernden Prozessparameter nach zumindest einer vorgegebenen Triggerbedingung getriggert wird, wobei die zumindest eine Triggerbedingung für die Triggerung des zumindest einen Sensors und bzw. oder des zumindest einen Prozessaktors über eine mit der Schweißstromquelle in Verbindung stehende Benutzerschnittstelle innerhalb der Periode zumindest eines Prozessparameters festgelegt wird, und bei Erfüllung der festgelegten Triggerbedingung über den zumindest einen Anschluss zumindest ein definiertes Triggersignal bereitgestellt und an den zumindest einen Sensor und bzw. oder den zumindest einen Prozessaktor übertragen wird, und somit der zumindest eine Sensor und bzw. oder der zumindest eine Prozessaktor entsprechend der festgelegten Triggerbedingungen durch den zumindest einen sich periodisch ändernden Prozessparameter getriggert wird.

Insbesondere bezieht sich die vorliegende Erfindung auf ein Schweißsystem und ein Schweißverfahren mit einer Schweißstromquelle zur Bereitstellung eines sich mit einer Periode periodisch ändernden Schweißstromes als Prozessparameter. Weitere Prozessparameter, wie zum Beispiel die Schweißspannung, die Schweißleistung, etc. werden ebenfalls durch die Schweißstromquelle vorgegeben oder ergeben sich durch den jeweiligen Prozess. Die Periode der sich periodisch ändernden Prozessparameter muss nicht konstant sein, sondern kann sich im Zuge des Prozesses auch ändern. Dies ist insbesondere bei einem realen Schweißprozess in der Praxis der Fall. Bei einem kurzschlussbehafteten Schweißprozess wird beispielsweise die aus einer Kurzschlussphase und einer Lichtbogenphase bestehende Periode des Schweißprozesses durch entsprechende Regelungen der Schweißparameter immer eine gewisse Schwankung haben. Beim jeweiligen Prozess können verschieden viele Prozessparameter auftreten. Bei den durch die Prozessaktoren beeinflussbaren Prozessparametern handelt es sich um einen oder mehrere der sich periodisch ändernden Prozessparametern des jeweiligen Prozesses.

Neben Lichtbogen-Schweißsystemen sind auch Laser-Schweißsysteme oder Laser-Hybrid-Schweißsysteme zur Verbindung oder Beschichtung von metallischen Werkstücken denkbar sowie Plasmabearbeitungssysteme, bei welchen die Oberfläche von Werkstücken mit einem Plasmastrahl behandelt wird, um diese beispielsweise zu reinigen oder für nachfolgende Prozesse vorzubereiten. Beispielsweise werden Plasmabearbeitungssysteme zur Reinigung von Oberflächen von Werkstücken vor Lackier- oder Beschichtungsvorgängen eingesetzt.

Unter den Begriff Prozessgröße fallen verschiedenste physikalische Größen, die vom Prozess abhängig sind oder vom Prozess beeinflusst werden. Beispielsweise kann bei einem Schweißprozess die Geometrie oder Breite der Schweißnaht als Prozessgröße von einem optischen Sensor oder beispielsweise die Temperatur der Schweißnaht als eine weitere Prozessgröße durch einen thermischen Sensor erfasst werden.

Je nach Anwendung werden die Prozessparameter durch den Prozessregler verschiedenartig geregelt. Der tatsächliche zeitliche Verlauf der Prozessparameter ist wieder vom aktuellen Prozessvorgang abhängig und weicht meist in unvorhersehbarer Weise vom Sollverlauf ab.

Bei derartigen sich periodisch ändernden Prozessparametern ist häufig eine Triggerung von Sensoren und bzw. oder Prozessaktoren auf bestimmte Ereignisse während jeder Periode für bestimmte Aufgaben notwendig oder erwünscht. Üblicherweise gibt es für bestimmte Sensoren oder Prozessaktoren vorgegebene Triggerbedingungen, welche nicht oder nur sehr eingeschränkt beeinflusst oder verändert werden können. Der tatsächliche Verlauf oder der Istverlauf des zumindest einen sich periodisch verändernden Prozessparameters hat wiederum auf die Triggerung der Sensoren und bzw. oder Prozessaktoren Einfluss.

Beispielsweise sind in der Schweißtechnik Kameras oder Schweißschirme bekannt, welche über den sich periodisch ändernden Schweißstrom der Schweißstromquelle getriggert werden, indem die Bildaufnahme der Kamera oder der Verschluss der Blendkassette durch eine Triggerbedingung am Schweißstrom gestartet wird.

Die EP 2 475 489 B1 beschreibt ein Überwachungsmodul zur Überwachung eines Lichtbogenprozesses, mit einer Kamera und einer Lichtquelle, welche synchron zum beobachteten Lichtbogenprozess angesteuert wird.

Der Artikel "Online-Schmelzbaddiagnostik zum Überwachen der Qualität und Vermeiden von Fehlern beim Lichtbogenschweißen" (Uwe Reisgen et al., Schweißen und Schneiden, Band 66, Heft 5, 1. Mai 2014, Seiten 243-249, DVS Verlag, Düsseldorf, DE) beschreibt ein Lichtbogenschweißverfahren, wobei zur Überwachung der Qualität des Schweißprozesses eine Kamera zur Erfassung der Schmelzbadgeometrie verwendet wird und nachfolgend die mit der Kamera aufgenommenen Bilder in einem internen Prozessor ausgewertet werden.

Die US 2004/0034608 A1 beschreibt ein optisches System zur Überwachung eines Lichtbogenschweißprozesses, wobei zur Reduktion der Komplexität der Regelung der Schweißparameter und zur Erzielung eines stabilen Materialübergangs während des Schweißverfahrens unter dem Einsatz von neuronalen Netzwerken eine automatische Regelung von Schweißparametern vorgenommen wird.

Die WO 2016/100950 A2, welche die Grundlage für den Oberbegriff der unabhängigen Ansprüche bildet, beschreibt ein Schweißsystem der gegenständlichen Art, bei dem Triggerbedingungen für Kameras zum Aufzeichnen der Schweißstelle flexibel eingestellt werden können. Mit den Kameras werden Bilder der Schweißstelle mit unterschiedlichen Belichtungszeiten aufgenommen und diese Bilder entsprechend kombiniert.

Herkömmliche Schweißstromquellen weisen meist nur bestimmte Anschlüsse für bestimmte Sensoren und bzw. oder Prozessaktoren auf, welche nach vorgegebenen Triggerbedingungen synchron zu einem sich periodisch ändernden Prozessparameter gesteuert werden können. Eine Einflussnahme auf die Triggerbedingungen ist meist nicht oder nur mit großem Aufwand möglich. Bei einer Änderung eines Prozessparameters kann die Triggerbedingung ebenfalls nicht verändert werden.

Der vorliegenden Erfindung liegt die Aufgabe zugrunde, ein oben genanntes Schweißsystem und Schweißverfahren zu schaffen, wobei die Triggerbedingungen für an die Schweißstromquelle anzuschließende Sensoren und bzw. oder Prozessaktoren besonders flexibel festgelegt und verändert werden können, um für verschiedenste Sensoren und bzw. oder Prozessaktoren optimale Triggerbedingungen für die jeweils gewählten Prozessparameter des Schweißprozesses vorgeben zu können. Die zu triggernden Sensoren und bzw. oder Prozessaktoren sollen dadurch mit möglichst geringen Störungen in Abhängigkeit des jeweiligen sich periodisch ändernden Prozessparameters angesteuert werden können. Nachteile bekannter Schweißsysteme oder Schweißverfahren sollen vermieden oder zumindest reduziert werden.

Gelöst wird die erfindungsgemäße Aufgabe durch ein oben genanntes Schweißsystem, wobei der Prozessregler zur Veränderung zumindest eines Prozessparameters aufgrund zumindest einer an der Benutzerschnittstelle festgelegten Triggerbedingung ausgebildet ist. Es ist also eine Benutzerschnittstelle an oder in Verbindung mit der Schweißstromquelle vorgesehen, über die für verschiedene Sensoren und bzw. oder Prozessaktoren, welche an die Schweißstromquelle angeschlossen werden können, die Triggerbedingungen besonders flexibel festgelegt werden können. Die festgelegte Triggerbedingung und ein entsprechendes Triggersignal wird dann über einen Anschluss, an welchen der Sensor und bzw. oder Prozessaktor angeschlossen werden kann, übertragen. Der Anschluss kann beispielsweise an der Schweißstromquelle angeordnet sein, kann aber auch an einem anderen Gerät, welches mit der Schweißstromquelle in Verbindung steht, vorgesehen sein. Unter den Begriff Anschluss fallen sowohl leitungsgebundene Anschlüsse, wie zum Beispiel Steckverbinder, oder auch drahtlose Schnittstellen oder Verbindungen, wie zum Beispiel Bluetooth^{®} oder andere Funkverbindungen. Dadurch kann einerseits eine optimale Anpassung der jeweiligen Sensoren und bzw. oder Prozessaktoren an den jeweiligen sich periodisch ändernden Prozessparameter erfolgen und es können auch beliebige Sensoren und bzw. oder Prozessaktoren mit der Schweißstromquelle für bestimmte Zwecke verbunden und in geeigneter Weise mit zumindest einem sich periodisch ändernden Prozessparameter entsprechend synchronisiert werden. Dadurch eröffnen sich auch neue Anwendungsfälle beispielsweise für die Überwachung eines Schweißprozesses mit einem sich periodisch ändernden Prozessparameter. Es können mehrere Sensoren und bzw. oder Prozessaktoren mit gemeinsamen Triggerbedingungen oder jeweils eigenen Triggerbedingungen und dem definierten Triggersignal getriggert werden. Die Benutzerschnittstelle muss nicht gezwungenermaßen von einer Person bedient werden, sondern kann beispielsweise auch durch eine Maschine betätigt werden. Dadurch, dass der Prozessregler zur Veränderung zumindest eines Prozessparameters aufgrund zumindest einer an der Benutzerschnittstelle festgelegten Triggerbedingung ausgebildet ist, wirkt sich eine über die Benutzerschnittstelle festgelegte Triggerbedingung auf die Prozessparameter aus. Beispielsweise kann eine bestimmte Triggerbedingung nur bei einer bestimmten Mindestdauer der Periode eines Prozessparameters ausgewählt und festgelegt werden. Ist die Dauer der Periode am Prozessregler unterhalb dieser Mindestdauer eingestellt, kann der Prozessregler über die festgelegte Triggerbedingung sozusagen überstimmt werden und unter Umständen automatisch oder nach erfolgter Bestätigung durch einen Benutzer der Prozess verändert werden. Neben der Beeinflussung zeitlicher Eigenschaften des Prozessparameters können auch andere Eigenschaften, wie Amplitude, Steigungen, oder dgl. des Prozessparameters durch die Triggerbedingung beeinflusst werden.

Die Benutzerschnittstelle kann beispielsweise durch ein Webinterface gebildet sein. Beispielsweise kann über ein mit der Schweißstromquelle verbindbares Notebook eine Website aufgerufen werden, welche die Benutzerschnittstelle zur Festlegung der Triggerbedingung bildet. Dies erlaubt gleichzeitig eine grafische Darstellung zumindest eines sich periodisch ändernden Prozessparameters und eine übersichtliche und einfache Möglichkeit der Festlegung der Triggerbedingungen. Anstelle von Webinterfaces sind auch einfache Bedienelemente und Anzeigen oder Touchscreens an der Schweißstromquelle oder damit verbundenen Einheiten denkbar.

Ein Sensor kann beispielsweise durch einen optischen Sensor gebildet sein oder einen optischen Sensor beinhalten. Häufig ist die Überwachung von Prozessgrößen mit einem optischen Sensor, beispielsweise einer Kamera, notwendig oder erwünscht, wobei der optische Sensor von zumindest einem sich periodisch ändernden Prozessparameter entsprechend getriggert werden muss. Beispielsweise ist es für die Erzielung einer guten Bildqualität einer Kamera bei einem Lichtbogenschweißverfahren notwendig, die Kameraaufnahmen dann zu machen, während kein Lichtbogen brennt, also beispielsweise in den Kurzschlussphasen eines kurzschlussbehafteten Schweißprozesses.

Ein Sensor kann auch durch einen induktiven oder kapazitiven Sensor gebildet sein oder einen induktiven oder kapazitiven Sensor beinhalten. Mit derartigen Sensoren können auch bestimmte Eigenschaften eines Prozesses beispielsweise zur Qualitätsüberwachung erfasst werden. Dabei ist es ebenfalls notwendig oder zweckmäßig, den induktiven oder kapazitiven Sensor entsprechend zu triggern, um störende Einflüsse des zumindest einen sich periodisch ändernden Prozessparameters auf die zu erfassende Prozessgröße zu minimieren.

Weitere Beispiele für Sensoren sind Distanzsensoren, wie zum Beispiel Lasersysteme zur Abstandsmessung, Strahlungsmesssensoren zur Überwachung eines Lichtbogens, Sensoren für die sogenannte Keyhole-Überwachung (Überwachung des Auftreffpunkts des Lasers) bei Laserbearbeitungsmaschinen, Magnetfeldsensoren, Spannungsmesssensoren mit Leiterschleifen, und viele mehr.

Ein Prozessaktor kann durch einen Manipulator, beispielsweise einen Roboter oder ein Linearfahrwerk, gebildet sein. Derartige Manipulatoren müssen ebenfalls in geeigneter Weise durch den sich periodisch ändernden Prozessparameter angesteuert und getriggert werden.

Ein Prozessaktor kann auch durch einen Motor für den Vorschub von Drähten gebildet sein. Beispielsweise kann der Strom oder die Geschwindigkeit von Motoren für den Vorschub von Schweißdrähten, sogenannten Heißdrähten, getriggert werden.

Andere Beispiele für triggerbare Prozessaktoren sind Ultraschallgeber, Laserquellen, Beleuchtungseinrichtungen und viele mehr.

Wenn der Prozessregler zur Bereitstellung des zumindest einen definierten Triggersignals bereits eine voreingestellte Zeitspanne vor der zumindest einen Triggerbedingung und Übertragung über den zumindest einen Anschluss ausgebildet ist, kann ein sogenannter "Pre-Trigger" erzielt werden. Da der Prozessregler Kenntnis über die Periode und den Verlauf des zumindest einen Prozessparameters (zumindest deren Sollwerte) besitzt, kann eine Triggerung der verbundenen Sensoren und bzw. oder Prozessaktoren bereits eine bestimmte voreingestellte Zeit vor dem Triggerzeitpunkt erfolgen. Dadurch kann beispielsweise eine Verzögerung aufgrund von Trägheiten bestimmter Sensoren und bzw. oder Prozessaktoren sowie Übertragungs- oder Signallaufzeiten kompensiert werden. Gemäß einem weiteren Merkmal der Erfindung kann die Zeit, um welche die Triggerung eines verbundenen Sensors oder Prozessaktors vor dem Triggerzeitpunkt getriggert werden soll, auch automatisch festgelegt bzw. eingestellt werden, sobald der Sensor und bzw. oder Prozessaktor mit dem Anschluss verbunden wird. Dies stellt eine Variante einer automatischen Einstellung des Pre-Triggers durch ein Erkennen des mit dem Anschluss verbundenen Sensors und bzw. oder Prozessaktors dar.

Gelöst wird die erfindungsgemäße Aufgabe in verfahrensmäßiger Hinsicht dadurch, dass zumindest ein Prozessparameter aufgrund zumindest einer an der Benutzerschnittstelle festgelegten Triggerbedingung verändert wird. Das Verfahren erlaubt eine flexible Festlegung verschiedener Triggerbedingungen und definierter Triggersignale für verschiedenste Sensoren und bzw. oder Prozessaktoren unabhängig vom Verlauf des jeweiligen sich periodisch ändernden Prozessparameters beim jeweiligen Schweißprozess. Zu den dadurch erzielbaren Vorteilen wird auf die obige Beschreibung des Schweißsystems verwiesen. Dadurch, dass zumindest ein Prozessparameter aufgrund zumindest einer an der Benutzerschnittstelle festgelegten Triggerbedingung verändert wird, kann aufgrund einer bestimmten festgelegten Triggerbedingung Einfluss auf den sich periodisch ändernden Prozessparameter genommen werden. Beispielsweise kann eine solche Veränderung des Prozessparameters durch den Prozessregler für die Erreichung einer bestimmten Triggerbedingung notwendig sein. Die Einflussnahme der Triggerbedingung auf den Prozessverlauf kann automatisch erfolgen oder nach Bestätigung eines Benutzers vorgenommen werden.

Vorteilhafterweise wird der zumindest eine Prozessparameter an der Benutzerschnittstelle grafisch dargestellt und die zumindest eine Triggerbedingung an dem zumindest einen grafisch dargestellten Prozessparameter festgelegt. Dies erlaubt eine einfache und individuelle Festlegung der jeweiligen geeigneten Triggerbedingungen für die verwendeten Sensoren und bzw. oder Prozessaktoren.

Als Triggerbedingungen können beispielsweise Triggerzeitpunkte innerhalb der Periode zumindest eines Prozessparameters festgelegt werden. Beispielsweise kann der Nulldurchgang des Prozessparameters als Triggerpunkt definiert werden oder ein Zeitpunkt, welcher eine bestimmte Zeitdauer vor oder nach diesem Nulldurchgang liegt.

Wenn über den zumindest einen Anschluss das zumindest eine definierte Triggersignal um eine voreingestellte Zeitspanne vor der zumindest einen Triggerbedingung übertragen wird, kann ein bereits oben erwähnter "Pre-Trigger" realisiert werden.

Die vorliegende Erfindung wird anhand der beigefügten Zeichnungen näher erläutert. Darin zeigen:
- Fig. 1: ein Blockschaltbild einer Schweißstromquelle zur Bereitstellung eines sich periodisch ändernden Schweißstromes und mit Sensoren zur Erfassung von Prozessgrößen;
- Fig. 2: einen Zeitverlauf eines sich periodisch ändernden Prozessparameters;
- Fig. 3: einen Zeitverlauf eines Schweißstroms mit verschiedenen Triggerbedingungen;
- Fig. 4: ein Triggerzeitpunkt als weiteres Beispiel einer Triggerbedingung;
- Fig. 5: eine Über- oder Unterschreitung einer Triggerschwelle als weiteres Beispiel einer Triggerbedingung; und
- Fig. 6: ein Beispiel eines sogenannten "Pre-Triggers".

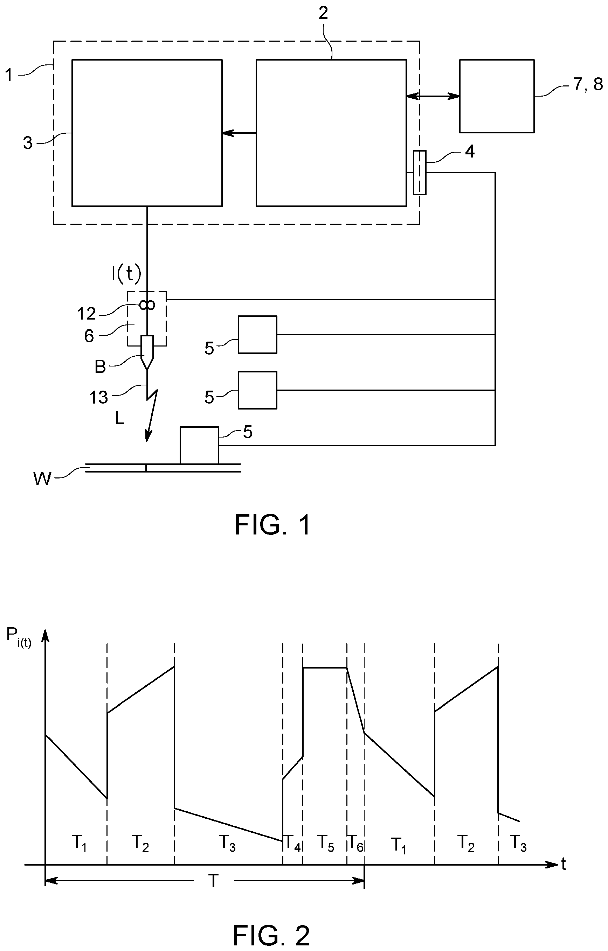

Fig. 1 zeigt ein Blockschaltbild einer Schweißstromquelle 1 zur Bereitstellung zumindest eines sich periodisch ändernden Schweißstromes I(t) als Prozessparameter Pᵢ(t). Die Schweißstromquelle 1 zur Bereitstellung des sich periodisch ändernden Prozessparameters Pᵢ(t) weist einen Prozessregler 2 auf, der die Periode T des Prozessparameters Pᵢ(t) festlegt. Beispielsweise definiert der Prozessregler 2 der Schweißstromquelle 1 die Dauer einer Kurzschlussphase KS und die Dauer einer Lichtbogenphase LB als Periode T des sich periodisch ändernden Schweißstroms I(t). Durch Eingaben an der Schweißstromquelle 1 (beispielsweise die Auswahl einer sogenannten Schweißkennlinie) wird die Funktion des Prozessreglers 2 definiert. Der Prozessregler 2 kann beispielsweise auch ein Funktionsblock einer Steuerung der Schweißstromquelle 1 sein. Der Prozessregler 2 kann daher als Software, also nicht physisch ausgestaltet sein oder physisch in Form eines Hardwarebausteins. Über ein Leistungsteil 3 der Schweißstromquelle 1 wird der jeweilige Prozessparameter Pᵢ(t) an einen Ausgang gelegt, beispielsweise der Schweißstrom I(t) zu einem Schweißbrenner B geführt, sodass ein entsprechender Lichtbogen L zwischen dem Schweißbrenner B und einem zu bearbeitenden Werkstück W gezündet werden kann.

Über einen Anschluss 4, der durch eine drahtgebundene oder drahtlose Schnittstelle gebildet sein kann, werden verschiedene Sensoren 5 und bzw. oder Prozessaktoren 6 mit der Schweißstromquelle 1 verbunden. Die Sensoren 5 können zur Überwachung des Prozesses und Erfassung bestimmter Prozessgrößen Gⱼ(t) dienen. Verschiedene Prozessaktoren 6 können zur Beeinflussung von Prozessparametern Pᵢ(t) verwendet werden. Die Sensoren 5 und bzw. oder Prozessaktoren 6 können auch mit anderen Einrichtungen, welche mit der Schweißstromquelle 1 in Verbindung stehen, verbunden werden. Beispielsweise können Kameras als Sensoren 5 auch an einem Roboter, der mit der Schweißstromquelle 1 in Verbindung steht, angeschlossen werden. Ein Prozessaktor 6 kann beispielsweise durch einen Motor 12 für den Vorschub eines Schweißdrahts 13 gebildet sein.

Weiters ist eine mit der Schweißstromquelle 1 in Verbindung stehende Benutzerschnittstelle 7 vorgesehen, über welche die zumindest eine Triggerbedingung Bₗ für die Triggerung zumindest eines Sensors 5 und bzw. oder zumindest eines Prozessaktors 6 festlegbar ist. Die festgelegte Triggerbedingung Bₗ für den zumindest einen Sensor 5 und bzw. oder den zumindest einen Prozessaktor 6 und ein entsprechendes Triggersignal Trig wird dann entsprechend an den Anschluss 4 übertragen, sodass sichergestellt wird, dass der zumindest eine Sensor 5 und bzw. oder der zumindest eine Prozessaktor 6 entsprechend der festgelegten Triggerbedingungen Bₗ durch den zumindest einen sich periodisch ändernden Prozessparameter Pᵢ(t), also beispielsweise durch den Schweißstrom I(t) getriggert werden. Über den Anschluss 4 erfolgt vorzugsweise ein bidirektionaler Datenaustausch mit dem Sensor 5 und bzw. oder Prozessaktor 6. Die Benutzerschnittstelle 7 kann beispielsweise durch ein Webinterface 8 oder dgl. gebildet sein. Dadurch wird ein bequemes und einfaches Festlegen der Triggerbedingung Bₗ, beispielsweise in grafischer Form, ermöglicht. Die Benutzerschnittstelle 7 kann sowohl manuell durch einen Benutzer als auch automatisch durch eine Maschine bedient werden. Beispielsweise können solche Maschinen durch Sensoren oder Aktoren gebildet sein, welche sich über ihre eigenen optimalen Werte einstellen.

Anstelle der in Fig. 1 dargestellten Schweißstromquelle 1 für einen Lichtbogen-Schweißprozess kann auch eine Schweißstromquelle zum Betreiben eines Lasers für einen Laser-Schweißprozess oder eine Schweißstromquelle zur Erzeugung sowohl eines Lichtbogens als auch eines Lasers für einen Laser-Hybrid-Schweißprozess vorgesehen sein. Darüber hinaus kann die Schweißstromquelle 1 auch eine Plasmastromquelle zur Erzeugung eines Plasmastrahls für einen Plasmaprozess, beispielsweise einen Oberflächenbehandlungsprozess oder einen Schneideprozess, gebildet sein (nicht dargestellt).

In Fig. 2 ist ein Verlauf eines sich periodisch ändernden Prozessparameters Pᵢ(t) in Abhängigkeit der Zeit t dargestellt. Im dargestellten Beispiel besteht eine Periode T des sich periodisch ändernden Prozessparameters Pᵢ(t) aus sechs verschiedenen Prozessphasen T₁ bis T₆, welche durch einen bestimmten Verlauf des Prozessparameters Pᵢ(t) innerhalb dieser Prozessphasen Tₘ gekennzeichnet sind. Beispielsweise handelt es sich dabei um die Phasen eines Schweißstromes I(t) bei einem Schweißprozess. Die Periode T und auch die innerhalb der Periode T vorliegenden Prozessphasen Tₘ müssen nicht konstant sein, sondern können auch variieren. Der Verlauf des zumindest einen Prozessparameters Pᵢ(t) wird im Prozessregler 2 der Schweißstromquelle 1 entsprechend den Einstellungen eines Benutzers festgelegt und definiert.

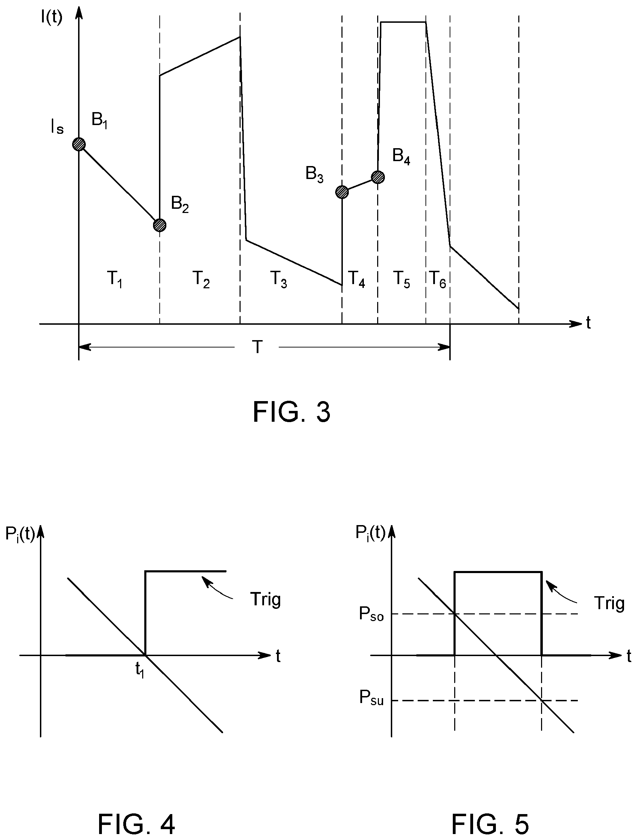

Fig. 3 zeigt den Verlauf des Schweißstroms I(t) in Abhängigkeit der Zeit t. Während einer Periode T des sich periodisch ändernden Schweißstroms I(t) existieren beispielsweise sechs Prozessphasen T₁ bis T₆. Vier verschiedene Triggerbedingungen B₁ bis B₄ sind beispielhaft eingezeichnet. Die Triggerbedingung B₁ ist durch Unterschreitung einer vorgegebenen Schwelle I_{S} des Schweißstroms I(t) festgelegt. Triggerbedingung B₂ ist durch den Beginn einer Pulsstromphase während einer Prozessphase T₂ gekennzeichnet. Die Triggerbedingung B₃ ist durch das Ende des Schweißstromanstiegs I(t) am Ende der Prozessphase T₃ charakterisiert. Schließlich wird die Triggerbedingung B₄ durch einen Anstieg der Steigungsrate des Schweißstroms I(t) am Ende der Prozessphase T₄ gekennzeichnet. Dies stellt nur eine willkürliche Auswahl an möglichen Triggerbedingungen Bₗ dar, welche je nach verwendeten und zu triggernden Sensoren 5 und bzw. oder Prozessaktoren 6 entsprechend ausgewählt bzw. festgelegt werden.

In der Schweißtechnik hängen die Triggerbedingungen auch vom jeweiligen Schweißprozess ab. Beim MIG (Metall-Inertgas)- oder MAG (Metall-Aktivgas)-Schweißen können bei Verwendung eines kurzschlussbehafteten Schweißprozesses Beginn und Ende der Kurzschlussphase geeignete Triggerbedingungen darstellen. Bei einem Pulslichtbogenschweißverfahren kann beispielsweise der Beginn und das Ende einer Pulsgrundstromphase als Triggerbedingung gewählt werden. Beim WIG (Wolfram-Inertgas)-Schweißen mit Gleichstrom (DC) und Strompulsen kann ebenfalls der Beginn und das Ende einer Pulsgrundstromphase als Triggerbedingung eingesetzt werden. Beim WIG-Schweißen mit Wechselstrom (AC) kann der Nulldurchgang des Schweißstroms (Wechsel von negativem Schweißstrom zu positivem Schweißstrom und umgekehrt) als Triggerbedingung herangezogen werden.

Beispielsweise kann ein optischer Sensor 5 zur Aufnahme einer Schweißnaht während eines Schweißprozesses mit dem Beginn einer Kurzschlussphase getriggert werden, sodass nur während der Kurzschlussphase, in der kein Lichtbogen L brennt, ein Signal geliefert wird und keine Störung des Sensorsignals durch den Lichtbogen L stattfindet. Die über die Benutzerschnittstelle 7 entsprechend festgelegte Triggerbedingung Bₗ definiert das Triggersignal Trig, welches über den Anschluss 4 übertragen und an den Sensor 5 und bzw. oder Prozessaktor 6 geleitet wird. Die Benutzerschnittstelle 7 kann beispielsweise durch ein Webinterface 8 gebildet sein. Dabei kann ein Benutzer mit Hilfe eines Notebooks eine bestimmte Website öffnen und darüber die Triggerbedingungen Bₗ für einen gewünschten Sensor 5 zur Erfassung einer bestimmten Prozessgröße Gⱼ(t) oder einen Prozessaktor 6 zur Beeinflussung eines Prozessparameters Pᵢ(t) festlegen. Während des Prozesses werden dann entsprechende Triggersignale gemäß den festgelegten Triggerbedingungen über den Anschluss 4 an den Sensor und bzw. oder Prozessaktor 6 übertragen.

Anstelle einer manuellen Festlegung der Triggerbedingungen Bₗ durch einen Benutzer über die Benutzerschnittstelle 7 sind auch automatische Festlegungen der Triggerbedingungen Bₗ über die Benutzerschnittstelle 7 denkbar. Beispielsweise kann beim Anschließen oder Verbinden eines bestimmten Sensors 5 an die Schweißstromquelle 1 auch automatisch eine für diesen Sensor 5 geeignete Triggerbedingung Bₗ in der Benutzerschnittstelle 7 festgelegt werden.

Wenn eine bestimmte Triggerbedingung Bₗ ausgewählt wird, welche nur mit einem speziellen Verlauf eines Prozessparameters Pᵢ(t) erzielbar ist, kann auch eine Veränderung des zumindest einen Prozessparameters Pᵢ(t) aufgrund der festgelegten Triggerbedingung Bₗ stattfinden. In diesem Fall hat also eine festgelegte Triggerbedingung Bₗ Einfluss auf den Prozessregler 2 der Schweißstromquelle 1. Beispielsweise können zeitliche Eigenschaften eines Prozessparameters Pᵢ(t) oder auch die Amplitude oder der Anstieg eines Prozessparameters Pᵢ(t) aufgrund der Triggerbedingung Bₗ verändert werden.

Fig. 4 zeigt den Verlauf eines Prozessparameters Pᵢ(t) in Abhängigkeit der Zeit t. Als Triggerbedingung ist der Nulldurchgang des Prozessparameters Pᵢ(t) festgelegt. Sobald die Triggerbedingung erfüllt ist, also der Prozessparameter Pᵢ(t) zum Zeitpunkt t₁ die Zeitachse t kreuzt, wird der Trigger ausgelöst und ein entsprechendes Triggersignal Trig über den Anschluss 4 übertragen.

Fig. 5 zeigt den Verlauf eines Prozessparameters Pᵢ(t) in Abhängigkeit der Zeit t bei weiteren Triggerbedingungen. Als Triggerbedingungen sind beispielsweise die Über- oder Unterschreitung einer oberen Schwelle P_{SO} des Prozessparameters Pᵢ(t) und die Über- oder Unterschreitung eines unteren Schwellwerts Pₛᵤ des Prozessparameters Pᵢ(t) festgelegt. Sobald die erste Triggerbedingung, im dargestellten Ausführungsbeispiel die Unterschreitung der oberen Schwelle P_{SO} des Prozessparameters Pᵢ(t) stattfindet, wird der Trigger ausgelöst bzw. das Triggersignal Trig eingeschaltet. Nach Erfüllung der zweiten Triggerbedingung, im dargestellten Ausführungsbeispiel die Unterschreitung des unteren Schwellwerts Pₛᵤ des Prozessparameters Pᵢ(t) wird der Trigger deaktiviert bzw. das Triggersignal Trig wieder abgeschaltet.

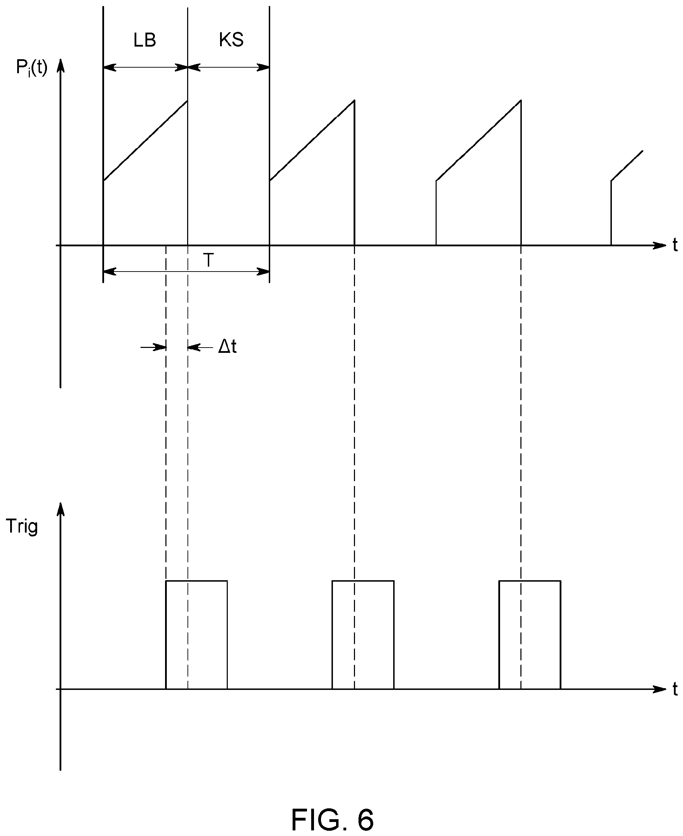

Schließlich zeigt Fig. 6 noch das Beispiel eines sogenannten "Pre-Triggers". Im oberen Diagramm ist ein sich periodisch ändernder Prozessparameter Pᵢ(t) in Abhängigkeit der Zeit t dargestellt. Es handelt sich beispielsweise um den Schweißstrom I(t) als Prozessparameter Pᵢ(t), der während einer Periode T eine Lichtbogenphase LB und eine Kurzschlussphase KS durchläuft. Als Triggerbedingung Bₗ wird eine voreingestellte Zeitspanne Δt vor Beginn der Kurzschlussphase KS festgelegt. Der Trigger bzw. das Triggersignal Trig (unteres Diagramm) wird also um diese voreingestellte Zeitspanne Δt vor Beginn der Kurzschlussphase KS aktiviert und beispielsweise nach Ablauf einer bestimmten Dauer wieder deaktiviert. Dadurch können beispielsweise Verzögerungen von Sensoren 5 oder Prozessaktoren 6 sowie Signallaufzeiten ausgeglichen oder kompensiert werden. Die Zeitspanne Δt kann auch in einem Sensor 5 oder Prozessaktor 6 hinterlegt sein und automatisch bei der Verwendung des Sensors 5 oder Prozessaktors 6 eingestellt werden. Wie bereits oben kurz erwähnt, kann der Sensor 5 und bzw. oder Prozessaktor 6 auch automatisch erkannt werden, sobald er mit dem Anschluss 4 verbunden wird und eine entsprechende Zeitspanne Δt, die zu diesem Sensor 5 und bzw. oder Prozessaktor 6 hinterlegt ist, automatisch als Wert für den Pre-Trigger eingestellt werden. Damit wird der jeweils angeschlossene Sensor 5 und bzw. oder Prozessaktor 6 automatisch mit einem hinterlegten Wert für die Zeitspanne Δt vor (oder auch nach) dem Triggerzeitpunkt getriggert.

Die vorliegende Erfindung ermöglicht eine besonders flexible Festlegung von Triggerbedingungen Bₗ an einer Benutzerschnittstelle 7 einer Schweißstromquelle 1 eines Schweißssystems.

## Patentansprüche

1. Schweißsystem mit einer Schweißstromquelle (1) zur Bereitstellung zumindest eines sich mit einer Periode (T) periodisch ändernden Prozessparameters (Pᵢ(t)), insbesondere eines Schweißstromes (I(t)), einem Prozessregler (2) zur Festlegung der Periode (T) des zumindest einen Prozessparameters (Pᵢ(t)), einem Leistungsteil (3), zumindest einem Sensor (5) zur Erfassung von Prozessgrößen (G₃(t)) und bzw. oder zumindest einem Prozessaktor (6) zur Beeinflussung von Prozessparametern (Pᵢ(t)) und zumindest einem Anschluss (4) zur Verbindung mit dem zumindest einen Sensor (5) und bzw. oder dem zumindest einen Prozessaktor (6), wobei der zumindest eine Sensor (5) und bzw. oder der zumindest eine Prozessaktor (6) durch den sich periodisch ändernden Prozessparameter (Pᵢ(t)) nach zumindest einer vorgegebenen Triggerbedingung (Bₗ) triggerbar ist, wobei eine mit der Schweißstromquelle (1) in Verbindung stehende Benutzerschnittstelle (7) vorgesehen ist, über welche die zumindest eine Triggerbedingung (Bₗ) für die Triggerung des zumindest einen Sensors (5) und bzw. oder des zumindest einen Prozessaktors (6) innerhalb der Periode (T) zumindest eines Prozessparameters (Pᵢ(t)) festlegbar ist, und bei Erfüllung der festgelegten Triggerbedingung (Bₗ) zumindest ein definiertes Triggersignal (Trig) bereitstellbar und über den zumindest einen Anschluss (4) an den zumindest einen Sensor (5) und bzw. oder den zumindest einen Prozessaktor (6) übertragbar ist, und somit der zumindest eine Sensor (5) und bzw. oder der zumindest eine Prozessaktor (6) entsprechend der festgelegten Triggerbedingungen (Bₗ) durch den zumindest einen sich periodisch ändernden Prozessparameter (Pᵢ(t)) triggerbar ist, **dadurch gekennzeichnet, dass** der Prozessregler (2) zur Veränderung des zumindest eines Prozessparameters (Pᵢ(t)) aufgrund der zumindest einen an der Benutzerschnittstelle (7) festgelegten Triggerbedingung (Bₗ) ausgebildet ist.

2. Schweißsystem nach Anspruch 1, **dadurch gekennzeichnet, dass** die Benutzerschnittstelle (7) durch ein Webinterface (8) gebildet ist.

3. Schweißsystem nach Anspruch 1 oder 2, **dadurch gekennzeichnet, dass** ein Sensor (5) durch einen optischen Sensor (9) gebildet ist oder einen optischen Sensor (9) beinhaltet.

4. Schweißsystem nach einem der Ansprüche 1 bis 3, **dadurch gekennzeichnet, dass** ein Sensor (5) durch einen induktiven oder kapazitiven Sensor (10) gebildet ist oder einen induktiven oder kapazitiven Sensor (10) beinhaltet.

5. Schweißsystem nach einem der Ansprüche 1 bis 4, **dadurch gekennzeichnet, dass** ein Prozessaktor (6) durch einen Manipulator (11), beispielsweise einen Roboter oder ein Linearfahrwerk, gebildet ist.

6. Schweißsystem nach einem der Ansprüche 1 bis 5, **dadurch gekennzeichnet, dass** ein Prozessaktor (6) durch einen Motor (12) für den Vorschub von Drähten (13) gebildet ist.

7. Schweißsystem nach einem der Ansprüche 1 bis 6, **dadurch gekennzeichnet, dass** der Prozessregler (2) zur Bereitstellung zumindest eines definierten Triggersignals (Trig) eine voreingestellte Zeitspanne (Δt) vor der zumindest einen Triggerbedingung (Bₗ) und Übertragung über den zumindest einen Anschluss (4) ausgebildet ist.

8. Schweißverfahren, bei dem in einer Schweißstromquelle (1) zumindest ein Prozessparameter (Pᵢ(t)), insbesondere ein Schweißstrom (I(t)), mit einer Periode (T) periodisch geändert wird, wobei mit einem Prozessregler (2) die Periode (T) des zumindest einen Prozessparameters (Pᵢ(t)) festgelegt wird, und von einem Leistungsteil (3) der zumindest eine Prozessparameter (Pᵢ(t)) erzeugt wird, und über zumindest einen Anschluss (4) zumindest ein Sensor (5) zur Erfassung von Prozessgrößen (Gᵢⱼ(t)) und bzw. oder zumindest ein Prozessaktor (6) zum Beeinflussen von Prozessparametern (Pᵢ(t)) verbunden wird, wobei der zumindest eine Sensor (5) und bzw. oder der zumindest eine Prozessaktor (6) durch den zumindest einen sich periodisch ändernden Prozessparameter (Pᵢ(t)) nach zumindest einer vorgegebenen Triggerbedingung (Bₗ) getriggert wird, wobei die zumindest eine Triggerbedingung (Bₗ) für die Triggerung des zumindest einen Sensors (5) und bzw. oder des zumindest einen Prozessaktors (6) über eine mit der Schweißstromquelle (1) in Verbindung stehenden Benutzerschnittstelle (7) innerhalb der Periode (T) zumindest eines Prozessparameters (Pᵢ(t)) festgelegt wird, und bei Erfüllung der festgelegten Triggerbedingung (Bₗ) über den zumindest einen Anschluss (4) zumindest ein definiertes Triggersignal (Trig) bereitgestellt und an den zumindest einen Sensor (5) und bzw. oder den zumindest einen Prozessaktor (6) übertragen wird, und somit der zumindest eine Sensor (5) und bzw. oder der zumindest eine Prozessaktor (6) entsprechend der festgelegten Triggerbedingungen (Bₗ) durch den zumindest einen sich periodisch ändernden Prozessparameter (Pᵢ(t)) getriggert wird, **dadurch gekennzeichnet, dass** der zumindest eine Prozessparameter (Pᵢ(t)) aufgrund der zumindest einen an der Benutzerschnittstelle (7) festgelegten Triggerbedingung (Bₗ) verändert wird.

9. Schweißverfahren nach Anspruch 8, **dadurch gekennzeichnet, dass** der zumindest eine Prozessparameter (Pᵢ(t)) an der Benutzerschnittstelle (7) grafisch dargestellt wird und die zumindest eine Triggerbedingung (Bₗ) an dem zumindest einen grafisch dargestellten Prozessparameter (Pᵢ(t)) festgelegt wird.

10. Schweißverfahren nach Anspruch 8 oder 9, **dadurch gekennzeichnet, dass** als Triggerbedingung (Bₗ) Triggerzeitpunkte (tₗ) innerhalb der Periode (T) zumindest eines Prozessparameters (Pᵢ(t)) festgelegt werden.

11. Schweißverfahren nach einem der Ansprüche 8 bis 10, **dadurch gekennzeichnet, dass** über den zumindest einen Anschluss (4) zumindest ein definierte Triggersignal (Trig) um eine voreingestellte Zeitspanne (Δt) vor der zumindest einen Triggerbedingung (Bₗ) übertragen wird.

## Claims

1. Welding system with a welding current source (1) for providing at least one process parameter (Pᵢ(t)), in particular a welding current (I(t)), that varies periodically with a period (T), a process controller (2) for specifying the period (T) of the at least one process parameter (Pᵢ(t)), a power unit (3), at least one sensor (5) for acquiring process variables (Gⱼ(t)) and/or at least one process actuator (6) for influencing process parameters (Pᵢ(t)) and at least one port (4) for connecting to the at least one sensor (5) and/or the at least one process actuator (6), wherein the at least one sensor (5) and/or the at least one process actuator (6) can be triggered by the periodically varying process parameter (Pᵢ(t)) according to at least one predefined trigger condition (Bₗ), **characterized in that** a user interface (7) is provided, which is connected to the welding current source (1), via which user interface the at least one trigger condition (Bₗ) for triggering the at least one sensor (5) and/or the at least one process actuator (6) can be specified within the period (T) of at least one process parameter (Pᵢ(t)), and if the specified trigger condition (Bₗ) is satisfied at least one defined trigger signal (Trig) can be transferred via the at least one port (4) to the at least one sensor (5) and/or the at least one process actuator (6), and therefore the at least one sensor (5) and/or the at least one process actuator (6) can be triggered by the at least one periodically varying process parameter (Pᵢ(t)), **characterized in that** the process controller (2) is designed to modify at least one process parameter (Pᵢ(t)) based on at least one trigger condition (Bₗ) specified on the user interface (7).

2. Welding system according to Claim 1, **characterized in that** the user interface (7) is formed by a web interface (8) .

3. Welding system according to Claim 1 or 2, **characterized in that** a sensor (5) is formed by an optical sensor (9) or contains an optical sensor (9).

4. Welding system according to any one of Claims 1 to 3, **characterized in that** a sensor (5) is formed by an inductive or capacitive sensor (10) or contains an inductive or capacitive sensor (10).

5. Welding system according to any one of Claims 1 to 4, **characterized in that** a process actuator (6) is formed by a manipulator (11), for example a robot or a linear undercarriage.

6. Welding system according to any one of Claims 1 to 5, **characterized in that** a process actuator (6) is formed by a motor (12) for feeding wires (13).

7. Welding system according to any one of Claims 1 to 6, **characterized in that** the process controller (2) is designed to provide at least one trigger signal (Trig) a predefined time period (Δt) before the at least one trigger condition (Bₗ) and to transfer said signal via the at least one port (4).

8. Welding method, in which in a welding current source (1) at least one process parameter (Pᵢ(t)), in particular a welding current (I(t)), is varied periodically with a period (T), wherein a process controller (2) is used to specify the period (T) of the at least one process parameter (Pᵢ(t)) and a power unit (3) generates the at least one process parameter (Pᵢ(t)), and at least one sensor (5) for acquiring process variables (Gᵢⱼ(t)) and/or at least one process actuator (6) for influencing process parameters (Pᵢ(t)) is connected via at least one port (4), wherein the at least one sensor (5) and/or the at least one process actuator (6) is triggered by the at least one periodically varying process parameter (Pᵢ(t)) according to at least one predefined trigger condition (Bₗ), **characterized in that** the at least one trigger condition (Bₗ) for triggering the at least one sensor (5) and/or the at least one process actuator (6) is specified via a user interface (7) connected to the welding current source (1) within the period (T) of at least one process parameter (Pᵢ(t)), and if the specified trigger condition (Bₗ) is satisfied at least one defined trigger signal (Trig) is transferred to the at least one sensor (5) and/or the at least one process actuator (6) via the at least one port (4), and therefore the at least one sensor (5) and/or the at least one process actuator (6) is triggered by the at least one periodically varying process parameter (Pᵢ(t)), **characterized in that** the at least one process parameter (Pᵢ(t)) is changed, based on the at least one trigger condition (Bₗ) specified on the user interface (7) .

9. Welding method according to Claim 8, **characterized in that** the at least one process parameter (Pᵢ(t)) is graphically displayed on the user interface (7) and the at least one trigger condition (Bₗ) is specified on the at least one graphically displayed process parameter (Pᵢ(t)).

10. Welding method according to Claim 8 or 9, **characterized in that** trigger times (tₗ) within the period (T) of at least one process parameter (Pᵢ(t)) can be specified as the trigger condition (Bₗ).

11. Welding method according to any one of Claims 8 to 10, **characterized in that** via the at least one port (4) at least one trigger signal (Trig) is transferred at a predefined time period (Δt) before the at least one trigger condition (Bₗ).

## Revendications

1. Système de soudage comprenant une source de courant de soudage (1) pour fournir au moins un paramètre de processus (Pi(t)) variant périodiquement avec une période (T), en particulier un courant de soudage (I(t)), un régulateur de processus (2) pour définir la période (T) d'au moins un paramètre de processus (Pᵢ(t)), une partie de puissance (3), au moins un capteur (5) pour détecter des grandeurs de processus (Gⱼ(t)) et/ou au moins un actionneur de processus (6) pour influencer des paramètres de processus (Pᵢ(t)) et au moins une connexion (4) pour la liaison avec l'au moins un capteur (5) et/ou l'au moins un actionneur de processus (6), dans lequel l'au moins un capteur (5) et/ou l'au moins un actionneur de processus (6) peut être déclenché par le paramètre de processus variant périodiquement (Pᵢ(t)) selon au moins une condition de déclenchement prédéfinie (Bₗ), dans lequel une interface utilisateur (7) en communication avec la source de courant de soudage (1) est prévue, par laquelle l'au moins une condition de déclenchement (Bₗ) pour le déclenchement d'au moins un capteur (5) et/ou d'au moins un actionneur de processus (6) peut être définie à l'intérieur de la période (T) d'au moins un paramètre de processus (Pᵢ(t)), et lorsque la condition de déclenchement définie (B1) est remplie, au moins un signal de déclenchement défini (Trig) peut être fourni et transmis via l'au moins une connexion (4) l'au moins un capteur (5) et/ou l'au moins un actionneur de processus (6), et ainsi l'au moins un capteur (5) et/ou l'au moins un actionneur de processus (6) peut être déclenché selon les conditions de déclenchement définies (Bₗ) par l'au moins un paramètre de processus variant périodiquement (Pᵢ(t)), **caractérisé en ce que** le régulateur de processus (2) est configuré pour modifier l'au moins un paramètre de processus (Pᵢ(t)) en fonction de l'au moins une condition de déclenchement (Bₗ) définie sur l'interface utilisateur (7).

2. Système de soudage selon la revendication 1, **caractérisé en ce que** l'interface utilisateur (7) est formée par une interface web (8).

3. Système de soudage selon la revendication 1 ou 2, **caractérisé en ce qu'**un capteur (5) est formé par un capteur optique (9) ou comprend un capteur optique (9).

4. Système de soudage selon l'une des revendications 1 à 3, **caractérisé en ce qu'**un capteur (5) est formé par un capteur inductif ou capacitif (10) ou comprend un capteur inductif ou capacitif (10).

5. Système de soudage selon l'une des revendications 1 à 4, **caractérisé en ce qu'**un actionneur de processus (6) est formé par un manipulateur (11), par exemple un robot ou un système de déplacement linéaire.

6. Système de soudage selon l'une des revendications 1 à 5, **caractérisé en ce qu'**un actionneur de processus (6) est formé par un moteur (12) pour l'avance de fils (13).

7. Système de soudage selon l'une des revendications 1 à 6, **caractérisé en ce que** le régulateur de processus (2) est configuré pour fournir au moins un signal de déclenchement défini (Trig) une période de temps prédéfinie (Δt) avant l'au moins une condition de déclenchement (Bₗ) et pour le transmettre via l'au moins une connexion (4).

8. Procédé de soudage, dans lequel au moins un paramètre de processus (Pᵢ(t)), en particulier un courant de soudage (I(t)), est modifié périodiquement avec une période (T) dans une source de courant de soudage (1), dans lequel la période (T) d'au moins un paramètre de processus (Pᵢ(t)) est définie par un régulateur de processus (2), et l'au moins un paramètre de processus (Pᵢ(t)) est généré par une partie de puissance (3), et au moins un capteur (5) pour détecter des grandeurs de processus (Gⱼ(t)) et/ou au moins un actionneur de processus (6) pour influencer des paramètres de processus (Pᵢ(t)) est connecté via au moins une connexion (4), dans lequel l'au moins un capteur (5) et/ou l'au moins un actionneur de processus (6) est déclenché par l'au moins un paramètre de processus variant périodiquement (Pᵢ(t)) selon au moins une condition de déclenchement prédéfinie (Bₗ), dans lequel l'au moins une condition de déclenchement (Bₗ) pour le déclenchement d'au moins un capteur (5) et/ou d'au moins un actionneur de processus (6) est définie via une interface utilisateur (7) en communication avec la source de courant de soudage (1) à l'intérieur de la période (T) d'au moins un paramètre de processus (Pᵢ(t)), et lorsque chaque condition de déclenchement définie (Bₗ) est remplie, au moins un signal de déclenchement défini (Trig) est fourni via l'au moins une connexion (4) et transmis l'au moins un capteur (5) et/ou l'au moins un actionneur de processus (6), et ainsi l'au moins un capteur (5) et/ou l'au moins un actionneur de processus (6) est déclenché selon les conditions de déclenchement définies (Bₗ) par l'au moins un paramètre de processus variant périodiquement (Pᵢ(t)), **caractérisé en ce que** l'au moins un paramètre de processus (Pᵢ(t)) est modifié en fonction de l'au moins une condition de déclenchement (Bₗ) définie sur l'interface utilisateur (7).

9. Procédé de soudage selon la revendication 8, **caractérisé en ce que** l'au moins un paramètre de processus (Pᵢ(t)) est représenté graphiquement sur l'interface utilisateur (7) et l'au moins une condition de déclenchement (Bₗ) est définie sur l'au moins un paramètre de processus (Pᵢ(t)) représenté graphiquement.

10. Procédé de soudage selon la revendication 8 ou 9, **caractérisé en ce que** des moments de déclenchement (tₗ) sont définis comme condition de déclenchement (Bₗ) à l'intérieur de la période (T) d'au moins un paramètre de processus (Pᵢ(t)).

11. Procédé de soudage selon l'une des revendications 8 à 10, **caractérisé en ce qu'**au moins un signal de déclenchement défini (Trig) est transmis via l'au moins une connexion (4) une période de temps prédéfinie (Δt) avant l'au moins une condition de déclenchement (B₁) .
